# EUROPEAN PATENT SPECIFICATION

(11) **EP 1 668 099 B1**
(45) Date of publication and mention of the grant of the patent: **05.11.2008**
(21) Application number: 04783988.1
(22) Date of filing: 14.09.2004
(51) Int. Cl.: C10L 1/18

(54) **LOW TEMPERATURE OPERABLE FATTY ACID ESTER FUEL COMPOSITION AND METHOD THEREOF**
BEI NIEDRIGER TEMPERATUR ARBEITSFÄHIGE FETTSÄUREESTERBRENNSTOFFZUSAMMENSETZUNG UND VERFAHREN DAFÜR
COMPOSITION DE CARBURANT A BASE D'ESTERS D'ACIDES GRAS UTILISABLE A BASSE TEMPERATURE ET PROCEDE CORRESPONDANT

(30) Priority: 15.09.2003 US 503150 P
(43) Date of publication of application: 14.06.2006
(73) Proprietor: The Lubrizol Corporation, Wickliffe, Ohio 44092-2298 (US)
(72) Inventor: FORESTER, David R., Weatherford, Texas 76087 (US); PRICE, David, Littleover Derby DE23 7YB (GB); BARBOUR, Robert H., Ashbourne Derbyshire DE6 1PW (GB); CERDA DE GROOTE, Carlos L., Lakewood, OH 44107 (US); SCHOBER, Barton J., Perry, OH 44081 (US)
(74) Representative: Weber, Thomas
(86) International application number: PCT/US2004/029979
(87) International publication number: WO 2005/028597

(56) References cited:
- EP-A- 0 626 442
- EP-A- 0 807 676
- WO-A-94/10267
- US-A- 5 441 545
- US-A- 5 772 706

## Description

### Background of the Invention

### 1. Field of the Invention

The present invention involves a fuel composition that comprises a fatty carboxylic acid ester from at least one naturally occurring triglyceride and a low temperature operability composition. The low temperature operability composition improves the low temperature operability of the fuel composition.

### 2. Description of the Related Art

Esterified fatty carboxylic acids, where the fatty carboxylic acids are derived from naturally occurring triglycerides, can be used as a partial or total replacement for a petroleum distillate and/or oxygenate in fuels for combustion in internal combustion engines and furnaces for locomotion, heating and power generation. The use of fatty carboxylic acid esters, which are derived from naturally occurring triglycerides, for combustion in fuels is particularly advantageous since naturally occurring triglycerides are renewable resources. Fuel compositions containing a major amount of a fatty carboxylic acid ester composition, about 30 wt.% or more of the ester composition, usually require a higher temperature for operability in terms of flow and filterability.

Erner in U.S.-A-4,364,743 discloses a synthetic fuel of fatty acid esters that provides a novel source of energy when burned alone or in combination with other known fuels such as diesel oil, heating, etc. in oil-burning devices.

Tack et al. in U.S.-A-4,863,486 disclose middle distillate fuel compositions with improved low temperature properties from polymers or copolymers having a narrow carbon number range of alkyl ester groups and containing a n-alkyl ester of a mono-ethylenically unsaturated C₄ to C₈ mono- or dicarboxylic acid wherein the average number of carbon atoms in the n-alkyl groups is from 12 to 14.

Dishong et al. in U.S.-A-5,157,088 disclose low molecular weight terpolymers containing nitrogen and ester groups where the terpolymers are shear stable and maintain desired high and low temperature viscosity characteristics in functional fluids such as automotive power transmission fluids.

Lal in European Patent Publication No. EP-A-626442 discloses pour point treated fatty acid esters as biodegradable combustion engine fuels.

Corkwell et al. in U.S. Patent Application No. 10/640448, filed 13 August 2003(published as US-A-2005-0050792), disclose a low temperature stable concentrate composition containing a fatty carboxylic acid based composition and a low temperature stability improving composition, and also discloses a fuel composition and method that employs the concentrate composition.

EP-A-0626442 relates to natural oils such as animal oils and vegetable oils that are transesterified and contain at least one pour point depressant. In addition to pour point depressants, the transesterified natural oil may also contain additional additives as well as a normally liquid fuel.

WO-A-94/10267 relates to improving the low temperature properties of a blend of biofuel and petroleum-based fuel oil by the addition of an ethylene-unsaturated ester copolymer, or a comb polymer, or a polar N compound, or a compound having at least one linear alkyl group connected to a non-polymeric organic residue.

It has now been found that certain low temperature operability compositions are extremely effective in improving the operability temperature of fuel compositions containing fatty carboxylic acid ester compositions derived from naturally occurring triglycerides by reducing the temperature required for operation in terms of flow and filterability, thus making these fuel compositions useful in the colder climates of Asia, Europe and North America.

### Summary of the Invention

An object of the present invention is to provide a low temperature operable fuel composition containing a composition from a renewable resource for use in an internal combustion engine and/or furnace for locomotion, heating and power generation.

Another object of the present invention is to provide a low temperature operable fuel composition containing a composition from a renewable resource for use in a spark-ignited and/or compression-ignited internal combustion engine.

Still a further object of this invention is a method to improve the low temperature operability of a fuel composition containing a composition from a renewable resource.

Additional objects and advantages of the present invention will be set forth in the Detailed Description which follows and, in part, will be obvious from the Detailed Description or may be learned by the practice of the invention. The objects and advantages of the invention may be realized by means of the instrumentalities and combinations pointed out in the appended claims.

To achieve the foregoing objects in accordance with the present invention as described and claimed herein, there is provided a fuel composition for an internal combustion engine, comprising:
(A) 10 to 99.99 % by weight of a fatty carboxylic acid ester composition from the transesterification of at least one naturally occurring triglyceride; and
(B) 100 to 10000 ppm by weight of a low temperature operability composition comprising an esterified copolymer of an alpha-olefin or styrene and an alpha, beta-unsaturated monocarboxylic or dicarboxylic acid or anhydride, wherein the copolymer of (B) is esterified with a mixture of two or more alcohols having 5 to 28 carbon atoms wherein the mixture of the two or more alcohols has an average carbon length of 10.7 to 11.6 on a weight % basis.

In an embodiment of the invention the above described fuel composition comprises the fatty carboxylic acid ester composition of (A) and the low temperature operability composition of (B) comprising the esterified copolymer from two comonomers wherein the esterified copolymer further comprises an additional comonomer selected from the group consisting of a C₁₋₄ alkyl alpha, beta-unsaturated monocarboxylic acid ester, a di(C₁₋₄ alkyl) alpha, beta-unsaturated dicarboxylic acid ester, a vinyl monocarboxylic acid ester, an alkyl vinyl ether, and a mixture thereof.

In a further embodiment of this invention a method to improve the low temperature operability of the above-described fuel composition for an internal combustion engine comprises admixing the ester composition of (A) with a low temperature improving amount of the low temperature operability composition of (B). Further embodiments are apparent from the dependent claims.

### Detailed Description of the Invention

The naturally occurring triglycerides of the present invention can be obtained from a renewable resource to include vegetable or plant fats and oils, animal fats and oils, and mixtures thereof. Vegetable or plant fats and oils include rapeseed oil, soybean oil, palm oil, corn oil, coconut oil, cottonseed oil, peanut oil, safflower oil, linseed oil, tung oil, castor oil, sunflower oil, meadowfoam oil, and mixtures thereof. In an embodiment of this invention the naturally occurring triglyceride is a rapeseed oil, a soybean oil, a palm oil, or a mixture thereof. Animal fats and oils include lard, lard oil, tallow, various fish oils, and mixtures thereof.

The fatty carboxylic acid ester composition (A) of the present invention can be derived from at least one naturally occurring triglyceride, as described above, by transesterification of the triglyceride with an alcohol. In an embodiment of the invention the alcohol is at least one monohydric alcohol. The alcohol can be linear, branched, cyclic, or a mixture thereof. The alcohol can have 1 to 22 carbon atoms, and in other instances can have 1 to 18 carbon atoms, and 1 to 10 carbon atoms. Useful alcohols for transesterifying naturally occurring triglycerides include methanol, ethanol, propanol and butanol. The transesterification can be done using either an acid or base catalyst. Acid catalysts include dry hydrogen chloride and sulfuric acid. Base catalysts include alkali metal and alkaline earth metal alkoxides such as sodium methoxide, alkali metal hydroxides such as potassium hydroxide, and titanium alkoxides such as titanium tetraisopropoxide. The transesterification is generally run using an excess of the alcohol reactant and/or removing one of the products to drive the reaction toward completion. The fatty carboxylic acid esters from the transesterification of the triglyceride are usually isolated from the glycerol by-product and any excess alcohol reactant by physical separation and distillation or fractional distillation. In an embodiment of the invention rapeseed oil, soybean oil, palm oil, or a mixture thereof is transesterified with an excess of methyl alcohol using a sodium methoxide catalyst, as described in U.S.-A-4,364,743 and EP-A-626442, to form fatty acid methyl esters which can be used in a fuel composition for an internal combustion engine to include a compression-ignited engine. In another embodiment of the invention fatty acid methyl esters are prepared by separate transesterifications of different triglycerides and then each fatty acid methyl ester can be used in a fuel composition as a single component or two or more of the fatty acid methyl esters can be used as a blend in a fuel composition. Fatty acid methyl esters such as rapeseed methyl ester, soy methyl ester and palm methyl ester are commercially available and are referred to as biodiesel fuels since they originate from naturally occurring triglycerides which are renewable resources.

The fatty carboxylic acid ester composition (A) of this invention can also be derived from at least one naturally occurring triglyceride, as described above, by esterification of one or more fatty carboxylic acids obtained from at least one naturally occurring triglyceride. A fatty carboxylic acid or mixture of fatty carboxylic acids can be obtained from naturally occurring triglycerides by a saponification process and are commercially available. The fatty carboxylic acid or mixture of acids, obtained by saponification of at least one naturally occurring triglyceride, can be saturated, unsaturated to include mono- and polyunsaturates, or a mixture thereof. The fatty carboxylic acid or mixture of acids can be linear, branched or a mixture thereof, but usually they are linear. The fatty carboxylic acid or mixture of acids can have 4 to 24 carbon atoms, and in other instances 8 to 22 carbon atoms, and 10 to 22 carbon atoms. The fatty carboxylic acid or mixture of acids can be esterified with an excess of an alcohol, where the alcohol is as described above for the transesterification of a triglyceride, using an acid catalyst such as sulfuric acid and removing the water by-product by azeotropic distillation usually with an aromatic solvent. The sulfuric acid catalyst in the crude product can be neutralized, and the ester or esters can be recovered by fractional distillation as described in the esterification procedure in U.S.-A-4,364,743. Alternatively, esterified fatty carboxylic acids or mixtures of esterified fatty carboxylic acids from naturally occurring triglycerides are commercially available. In an embodiment of the invention the fatty carboxylic acid or mixture of fatty carboxylic acids are esterified with an olefin such as ethylene.

The low temperature operability composition (B) of the present invention comprises an esterified copolymer of an alpha-olefin or styrene and an alpha, beta-unsaturated monocarboxylic or dicarboxylic acid or anhydride. The alpha-olefin can have 2 to 30 carbon atoms, and in other instances can have 2 to 24 carbon atoms, and 2 to 20 carbon atoms. Useful alpha-olefins include ethylene, propylene, 1-butene, isobutylene, 1-hexene, 1-octene, 1-decene, 1-dodecene, 1-tetradecene, 1-hexadecene and 1-octadecene. The alpha, beta-unsaturated monocarboxylic acid or anhydride can have 3 or more carbon atoms, and in other instances can have 3 to 6 carbon atoms, and 3 to 5 carbon atoms. Useful alpha, beta-unsaturated monocarboxylic acids include acrylic acid, methacrylic acid, crotonic acid and 2-pentenoic acid. The alpha, beta-unsaturated dicarboxylic acid or anhydride can have 4 or more carbon atoms, and in other instances can have 4 to 6 carbon atoms, and 4 to 5 carbon atoms. Useful alpha, beta-unsaturated dicarboxylic acids and anhydrides include maleic acid, maleic anhydride, fumaric acid, itaconic acid and itaconic anhydride. In an embodiment of the invention the alpha, beta-unsaturated monocarboxylic or dicarboxylic acid or anhydride is maleic acid, maleic anhydride, fumaric acid, itaconic acid, itaconic anhydride, acrylic acid, or methacrylic acid. In another embodiment of the invention the low temperature operability composition (B) comprises an esterified copolymer where the copolymer is formed from styrene and maleic anhydride. The copolymer of (B) can be prepared by a free radical polymerization of its two comonomers in a mole ratio of 0.25:1 to 1:0.25, and in other instances of 0.5:1 to 1:0.5, 0.75:1 to 1:0.75, and 1:1. The copolymer of (B) prior to esterification can have a reduced specific viscosity of 0.05 to 2, and in other embodiments can have a reduced specific viscosity of 0.05 to 1, and 0.07 to 0.8. The reduced specific viscosity of a polymer and its relation to the molecular weight of that polymer are defined and described in U.S.-A-5,413,725 and in "Principles of Polymer Chemistry", Paul J. Flory, 1953 edition, page 308 and following pages. The copolymer of (B) is esterified with a mixture of two or more alcohols. The alcohols can be linear, branched, or a mixture thereof, but they are generally linear alcohols to include commercially available alcohols such as synthetic primary straight-chain alcohols made by Ziegler-type reaction of aluminum alkyls with ethane and hydrogen. The alcohols used to esterify the copolymer of (B) can have 5 to 28 carbon atoms, and in other embodiments can have 5 to 20 carbon atoms, 5 to 18 carbon atoms, and 5 to 16 carbon atoms. The copolymer of (B) can be esterified by the above described mixture of two or more alcohols to 50% or greater, and in other instances can be esterified to 65% or greater, 80% or greater, and 95% or greater. The copolymer of (B) can be esterified with a mixture of two or more alcohols or a copolymer of (B) can be esterified separately with each alcohol and the separately esterified copolymers combined, but usually the copolymer of (B) is esterified with a mixture of alcohols. In the present invention the copolymer of (B) is esterified with the above described mixture of two or more alcohols wherein the mixture of two or more alcohols has an average carbon length of 10.7 to 11.8. In an embodiment of the invention the esterification of the copolymer (B) with the above described mixture of two or more alcohols can be driven toward completion by including up to 20 mole %, based on carbonyl group equivalents, of lower molecular weight alcohols having 1 to 4 carbon atoms, and in other embodiments up to 15 mole % and up to 10 mole % of the lower molecular weight alcohols can be included.

In an embodiment of the invention the esterified copolymer of (B) can have an unesterified portion remaining which can be reacted with up to 6 mole % of an amine, and in other instances up to 4 mole % and up to 2 mole % of the amine. The amine can be a monoamine or a polyamine, and usually the amine has only one amino group that is a primary or a secondary amino group. Examples of useful amines include ammonia, butylamine, diethylamine, N,N-dimethylethylenediamine, and aminoalkyl substituted heterocyclic compounds such as 4-(3-aminopropyl)morpholine.

In another embodiment of the invention the copolymer of (B), as described above, can further comprise an additional comonomer selected from the group consisting of a C₁₋₄ alkyl alpha, beta-unsaturated monocarboxylic acid ester, a di(C₁₋₄ alkyl) alpha, beta-unsaturated dicarboxylic acid ester, a vinyl monocarboxylic acid ester, an alkyl vinyl ether, and a mixture thereof. In still another embodiment of the invention the copolymer of (B) further comprises an additional comonomer which is methyl methacrylate. The additional comonomer is usually present in a minor amount relative to the other two comonomers that are used to form the copolymer of (B). The additional comonomer can be present at 0.3 mole or less per mole of either of the other two comonomers, and in other instances can be present at 0.2 mole or less and at 0.1 mole or less per mole of either of the other two comonomers. Examples of useful additional third comonomers include methyl methacrylate, methyl acrylate, diethyl fumarate, dimethyl maleate, vinyl acetate, vinyl propionate, and ethyl vinyl ether.

The above described esterified copolymer of (B) can be prepared by a free radical polymerization of the two or three comonomers to form a copolymer, an acid catalyzed esterification of the copolymer with a mixture of alcohols which optionally can include lower molecular weight C₁₋₄ alcohols to drive the esterification toward completion, usually neutralization of the esterification acid catalyst with a base such as an alkali metal hydroxide, and optionally reaction of remaining unesterified portions of the copolymer with an amine that has only one amino group that is a primary or a secondary amino group. During the esterification, azeotropic distillation with a solvent such as toluene is generally used to remove the water by-product and to drive the esterification toward completion. Prior to a final distillation and filtration of the crude esterified copolymer, an oxidation inhibitor can be added at levels of 0.05 to 1% by weight of the final esterified copolymer product. The oxidation inhibitor can include hindered phenols and alkylated diarylamines. Also prior to the final distillation and filtration of the crude esterified copolymer, a diluent is typically added at a level of 5 to 50% by weight of the final esterified copolymer product, and in other instances at a level of 10 to 40% by wt., and 15 to 30% by wt. The diluent can be a mineral oil, a solvent, or a mixture thereof. The solvent can be an aromatic hydrocarbon, an aliphatic hydrocarbon, an alcohol, or a mixture thereof. U.S.-A- 5,157,088 and EP-A-626442 provide a description of a general procedure for preparing esterified copolymers from two or three comonomers of this invention.

The fatty carboxylic acid ester composition (A) is present in the fuel composition of this invention from 10 to 99.99% by weight. The ester composition (A) is preferably present in the fuel composition in a major amount from 30 to 99.99% by weight, 55 to 99.99% by weight, and 80 to 99.99% by weight. The low temperature operability composition (B) can be present in the fuel composition in a minor amount from 100 to 10,000 ppm (parts per million) by weight, and in other embodiments from 500 to 9,000 ppm by wt., 1000 to 8000 ppm by wt., 1500 to 7000 ppm by wt., 2000 to 6000 ppm by wt., and 2000 to 5000 ppm by wt.

The above described fuel composition of the present invention can further comprise (C) at least one additional fuel additive. The at least one additional fuel additive included in the fuel composition will generally depend on the application that the fuel composition is to be used for. A fuel composition intended for use in an internal combustion engine can further comprise at least one additional fuel additive to include nitrogen-containing detergents, amine-containing polyethers, metal-containing detergents, antioxidants such as hindered phenols, rust inhibitors such as alkenylsuccinic acids, corrosion inhibitors such as alkylamines, combustion improvers such as nitroalkanes, demulsifiers, antifoaming agents, valve seat recession additives, metal deactivators, supplementary lubricity agents, bacteriostatic agents, gum inhibitors, anti-icing agents, anti-static agents, organometallic fuel-borne catalysts for improved combustion performance, supplementary low temperature flow improvers, and fluidizers such as mineral oils, polyolefins and polyethers. The additional fuel additive or additives can be present in the fuel composition depending on the function of each additive from 0.1 to 10,000 ppm by weight.

The fuel composition of this invention can further comprise (D) a normally liquid fuel. The normally liquid fuel can be a hydrocarbon fuel, a nonhydrocarbon fuel, or a mixture thereof. The hydrocarbon fuel can be a petroleum distillate to include a gasoline as defined by ASTM specification D4814 or a diesel fuel as defined by ASTM specification D975. The hydrocarbon fuel can be a hydrocarbon prepared by a gas to liquid process to include the Fischer-Tropsch Process, the Lurgi Process, the Oil/Gas Process, and the SASOL Process. The nonhydrocarbon fuel can be an oxygen-containing composition to include an alcohol, an ether, a nitroalkane, a plant or animal oil or fat, or a mixture thereof. The nonhydrocarbon fuel can be an oxygenated derivative of a hydrocarbon prepared by a gas to liquid process to include those listed above for hydrocarbon fuels such as the Fischer-Tropsch Process. Useful nonhydrocarbon fuels include methanol, ethanol, diethyl ether, methyl t-butyl ether, and nitromethane. Useful mixtures of fuels include a mixture of hydrocarbon fuels such as a mixture of a petroleum distillate and a gas to liquid process hydrocarbon, a mixture of nonhydrocarbon fuels such as a mixture of ethanol and methanol, and a mixture of hydrocarbon and nonhydrocarbon fuels such as a mixture of gasoline and ethanol and/or methanol, a mixture of a diesel fuel and ethanol, and a mixture of a gas to liquid process hydrocarbon and an alcohol and/or an ether and/or a nitroalkane. In an embodiment of the invention the normally liquid fuel is an emulsion of water in a hydrocarbon fuel, a nonhydrocarbon fuel, or a mixture thereof as described hereinabove. This emulsion can be prepared by a mechanical mixing, by including one or more emulsifiers and/or surfactants in the emulsion, or by a combination of mechanical mixing and inclusion of emulsifiers and/or surfactants. The normally liquid fuel can comprise a hydrocarbon fuel that has a reduced sulfur content such as a gasoline having a sulfur content at or below 1,000 ppm by wt. or a diesel fuel having a sulfur content at or below 500 ppm by wt. In an embodiment of the invention the normally liquid fuel (D) is a diesel fuel. The normally liquid fuel can be present in the fuel composition of the invention up to 98% by weight, and in other embodiments can be present in the fuel composition up to 69% by wt., up to 44% by wt., and up to 19% by wt.

The fuel composition of the present invention can be prepared by simply combining the above described components (A), (B), and optionally (C) and (D) at ambient temperature. In another embodiment of the invention the fuel composition can be prepared by combining components (A), (B), and optionally (C) and (D), and mixing the combined components at an elevated temperature of 40 to 100°C until the composition is homogeneous.

A method of the present invention for improving the low temperature operability of a fuel composition, as described above, comprises admixing the above described ester composition (A) with a low temperature improving amount of the above described composition (B). The amount of the composition (B) to add can vary from 100 to 10,000 ppm by weight, and will normally increase as the amount of (A) increases in the fuel composition. In an embodiment of the invention the amount of composition (B) to improve the low temperature operability of the fuel composition containing (A) is an amount of (B) that lowers the cold filter plugging point (CFPP), as measured by the ASTM D6371 standard test method for cold filter plugging point of diesel and heating fuels, of the fuel composition below the CFPP of an untreated sample of (A). In another embodiment of the invention the amount of (B) to improve the low temperature operability of the fuel composition is an amount that lowers the CFPP of the fuel composition to -20°C or lower since most esterified fatty acids from plant and animal fats and oils, including transesterified naturally occurring triglycerides, have CFPP values well above -20°C.

The following examples are provided to demonstrate advantages of the present invention, but they are not intended to nor should they be used to limit the scope of the invention.

| CFPP Evaluation of Biodiesel Fuel Compositions¹ | | | | | |
|---|---|---|---|---|---|
| Example | ACL² | RMB1³ °C(ppm) | RME2³ °C(ppm) | RME3³ °C(ppm) | RME4³ °C(ppm) |
| 1 comparative | - | -14 | -15.5 | -13 | -14 |
| 2 comparative | 9.1 | -14(6k) | - | -16(4k) | - |
| 3 comparative | 10.4 | -13(6k) | -15(6k) | -24(3.5k) | -12(6k) |
| 4 | 11.3 | -20(2.5k) | -22(2.5k) | -21(2.5k) | -22(6k) |
| 5 comparative | 12.8 | -18(4k) | - | -13.5(6k) | - |

| | | | | | |
|---|---|---|---|---|---|
| ¹ The cold filter plugging points (CFPP) of biodiesel fuel compositions in examples 1-5 were measured per the ASTM D6371 standard test method. Example 1 provides CFPP values of four untreated rapeseed methyl ester samples as a comparative baseline. In examples 2-5 the CFPP values were measured for biodiesel fuel compositions containing the rapeseed methyl ester samples and varying levels of maleic anhydride-styrene copolymer esterified with alcohol mixtures that varied in average carbon length with examples 2, 3 and 5 being comparative since their average carbon length is outside the present invention. Each of the esterified copolymers contained 20% by weight of an aromatic solvent. ² ACL is average carbon length of the alcohol mixture on a weight percent basis that was used to esterify the maleic anhydride-styrene copolymer. ³ RME1 through RME4 are the rapeseed methyl ester samples obtained from different suppliers and used in examples 1-5. The CFPP values are given in degrees centigrade and the values in parentheses are levels of esterified copolymers including aromatic solvent used to treat the rapeseed methyl esters in thousands of ppm by weight. For example, 6k represents a 6000 ppm by weight treatment level. | | | | | |

## Claims

1. A fuel composition for an internal combustion engine, comprising:
(A) 10 to 99.99 % by weight of a fatty carboxylic acid ester composition from the transesterification of at least one naturally occurring triglyceride; and
(B) 100 to 10000 ppm by weight of a low temperature operability composition comprising an esterified copolymer of an alpha-olefin or styrene and an alpha, beta-unsaturated monocarboxylic or dicarboxylic acid or anhydride, wherein the copolymer of (B) is esterified with a mixture of two or more alcohols having 5 to 28 carbon atoms wherein the mixture of the two or more alcohols has an average carbon length of 10.7 to 11.6 on a weight % basis.

2. The fuel composition of claim 1 wherein the naturally occurring triglyceride is a vegetable oil.

3. The fuel composition of claim 1 wherein the naturally occurring triglyceride is transesterified with at least one monohydric alcohol having 1 to 22 carbon atoms.

4. The fuel composition of claim 1 wherein the alpha, beta-unsaturated monocarboxylic or dicarboxylic acid or anhydride is maleic acid, maleic anhydride, fumaric acid, itaconic acid, itaconic anhydride, acrylic acid, or methacrylic acid.

5. The fuel composition of claim 4 wherein the copolymer of (B) is formed from styrene and maleic anhydride.

6. The fuel composition of claim 1 wherein the copolymer of (B) further comprises an additional comonomer selected from the group consisting of a C₁₋₄ alkyl alpha, beta-unsaturated monocarboxylic acid ester, a di(C₁₋₄ alkyl) alpha, beta-unsaturated dicarboxylic acid ester, a vinyl monocarboxylic acid ester, an alkyl vinyl ether, and a mixture thereof.

7. The fuel composition of claim 1 wherein the copolymer of (B) is esterified with a mixture of two or more alcohols having 5 to 20 carbon atoms.

8. The fuel composition of claim 1 wherein the esterified copolymer of (B) is further reacted with an amine having only one amino group that is a primary or a secondary amino group.

9. The fuel composition of claim 1, further comprising:
(C) a normally liquid fuel.

10. A method for improving the low temperature operability of a fuel composition, comprising:
admixing the ester composition (A) with 100 to 10000 ppm by weight of the composition (B) of claim 1.

## Patentansprüche

1. Treibstoffzusammensetzung für einen Verbrennungsmotor, umfassend:
(A) 10 bis 99,99 Gew.-% einer Fettsäureesterzusammensetzung aus der Umesterung wenigstens eines natürlich vorkommenden Triglycerids; und
(B) 100 bis 10 000 ppm (w/w) einer Zusammensetzung für Betrieb bei niedriger Temperatur, die ein verestertes Copolymer eines α-Olefins oder von Styrol und einer α,β-ungesättigten Mono- oder Dicarbonsäure oder eines entsprechenden Anhydrids umfasst, wobei das Copolymer von (B) mit einem Gemisch von zwei oder mehr Alkoholen mit 5 bis 28 Kohlenstoffatomen verestert wird, wobei das Gemisch der zwei oder mehr Alkohole eine mittlere Kohlenstofflänge von 10,7 bis 11,6 auf Gewichtsprozentbasis hat.

2. Treibstoffzusammensetzung gemäß Anspruch 1, wobei das natürlich vorkommende Triglycerid ein Pflanzenöl ist.

3. Treibstoffzusammensetzung gemäß Anspruch 1, wobei das natürlich vorkommende Triglycerid mit wenigstens einem einwertigen Alkohol mit 1 bis 22 Kohlenstoffatomen umgeestert ist.

4. Treibstoffzusammensetzung gemäß Anspruch 1, wobei es sich bei der α,β-ungesättigten Mono- oder Dicarbonsäure oder dem entsprechenden Anhydrid um Maleinsäure, Maleinsäureanhydrid, Fumarsäure, Itaconsäure, Itaconsäureanhydrid, Acrylsäure oder Methacrylsäure handelt.

5. Treibstoffzusammensetzung gemäß Anspruch 4, wobei das Copolymer von (B) aus Styrol und Maleinsäureanhydrid gebildet ist.

6. Treibstoffzusammensetzung gemäß Anspruch 1, wobei das Copolymer von (B) weiterhin ein zusätzliches Comonomer umfasst, das aus der Gruppe ausgewählt ist, die aus einem C₁₋₄-Alkylester einer α,β-ungesättigten Monocarbonsäure, einem Di(C₁₋₄-alkyl)ester einer α,β-ungesättigten Dicarbonsäure, einem Vinylester einer Monocarbonsäure, einem Alkylvinylether und einem Gemisch davon besteht.

7. Treibstoffzusammensetzung gemäß Anspruch 1, wobei das Copolymer von (B) mit einem Gemisch von zwei oder mehr Alkoholen mit 5 bis 20 Kohlenstoffatomen verestert ist.

8. Treibstoffzusammensetzung gemäß Anspruch 1, wobei das veresterte Copolymer von (B) weiterhin mit einem Amin umgesetzt ist, das nur eine Aminogruppe aufweist, bei der es sich um eine primäre oder eine sekundäre Aminogruppe handelt.

9. Treibstoffzusammensetzung gemäß Anspruch 1, die weiterhin
(C) einen normalerweise flüssigen Treibstoff
umfasst.

10. Verfahren zur Verbesserung der Betriebsfähigkeit einer Treibstoffzusammensetzung bei niedriger Temperatur, umfassend:
Beimischen der Esterzusammensetzung (A) zu 100 bis 10 000 ppm (w/w) der Zusammensetzung (B) von Anspruch 1.

## Revendications

1. Composition de carburant pour un moteur à combustion interne, comprenant:
(A) de 10 à 99,99% en poids d'une composition d'esters d'acides carboxyliques gras provenant de la transestérification d'au moins un triglycéride naturellement présent; et
(B) de 100 à 10000 ppm en poids d'une composition pour fonctionnement à basse température comprenant un copolymère estérifié d'une alpha-oléfine ou de la styrène et un acide ou anhydride monocarboxylique ou dicarboxylique alpha-bêta insaturé, dans laquelle le copolymère de (B) est estérifié avec une mélange de deux ou plusieurs alcools ayant de 5 à 28 atomes de carbone, dans laquelle le mélange des deux ou plusieurs alcools a une longueur de carbone moyenne à base pour cents en poids de 10,7 à 11,6.

2. Composition de carburant selon la revendication 1, dans laquelle le triglycéride naturellement présent est une huile végétale.

3. Composition de carburant selon la revendication 1, dans laquelle le triglycéride naturellement présent est transestérifié avec au moins un alcool mono-hydrique ayant de 1 à 22 atomes de carbone.

4. Composition de carburant selon la revendication 1, dans laquelle l'acide ou anhydride monocarboxylique ou dicarboxylique alpha-bêta insaturé est l'acide maléique, l'anhydride d'acide maléique, l'acide fumarique, l'acide itaconique, l'anhydride d'acide itaconique, l'acide acrylique ou l'acide méthacrylique.

5. Composition de carburant selon la revendication 4, dans laquelle le copolymère de (B) est formé à partir de styrène et d'anhydride maléique.

6. Composition de carburant selon la revendication 1, dans laquelle le copolymère de (B) comprend en outre un comonomère additionnel choisi dans le groupe consistant en un ester d'alkyle en C₁₋₄ d'acide monocarboxylique alpha-bêta insaturé, un ester de di(alkyle en C₁₋₄) d'acide dicarboxylique alpha-bêta insaturé, un ester de vinyle d'acide monocarboxylique, un éther d'alkyle et de vinyle et une mélange de ceux-ci.

7. Composition de carburant selon la revendication 1, dans laquelle le copolymère de (B) est estérifié avec une mélange de deux ou plusieurs alcools ayant de 5 à 20 atomes de carbone.

8. Composition de carburant selon la revendication 1, dans laquelle on a fait réagir le copolymère estérifié de (B) encore avec une amine ayant seulement un groupe amino qui est un groupe amino primaire ou secondaire.

9. Composition de carburant selon la revendication 1, comprenant en outre:
(C) un carburant normalement liquide.

10. Procédé pour améliorer le fonctionnement à basse température d'une composition de carburant, comprenant:
mélanger la composition d'ester (A) avec 100 à 10000 ppm en poids de la composition (B) selon la revendication 1.
